# FASCICULE DE BREVET EUROPEEN

(11) **EP 1 054 428 B1**
(45) Date de publication et mention de la délivrance du brevet: **10.11.2004**
(21) Numéro de dépôt: 00401290.2
(22) Date de dépôt: 11.05.2000
(51) Int. Cl.: H01J 9/26

(54) **Joint de scellement pour écrans d'affichage plats**
Abdichtung für Flachbildschirme
Seal for flat panel displays

(30) Priorité: 21.05.1999 FR 9906457
(43) Date de publication de la demande: 22.11.2000
(73) Titulaire: Thomson Plasma, 92100 Boulogne-Billancourt (FR)
(72) Inventeur: Baret, Guy, 92100 Boulogne-Billancourt (FR)
(74) Mandataire: Ruellan-Lemonnier, Brigitte

(56) Documents cités:
- EP-A- 0 529 392
- FR-A- 2 727 568
- GB-A- 1 348 204
- PATENT ABSTRACTS OF JAPAN vol. 016, no. 558 (E-1294), 27 novembre 1992 (1992-11-27) & JP 04 215230 A (OKI ELECTRIC IND CO LTD), 6 août 1992 (1992-08-06)

## Description

La présente invention concerne la réalisation de composants sur des substrats de verre devant être scellés, tels que des écrans d'affichage plats du type panneau à plasma ou des dispositifs d'affichage à émission de champ (également connu sous le nom de FED).

Dans ces cas d'utilisation, le composant est réalisé par un assemblage de deux substrats de verre qui doivent être scellés l'un contre l'autre. Les substrats, dont les dimensions sont au moins égales à la surface utile de l'écran d'affichage, peuvent atteindre plus de 100 cm de diagonale. Ils constituent des éléments fondamentaux pour le composant. Le verre est choisi comme matériau de substrat pour plusieurs raisons.

Premièrement, lorsqu'un substrat forme la partie visible d'un écran d'affichage, il est impératif que celui-ci présente des qualités optiques et mécaniques adéquates.

Deuxièmement, les différentes étapes qui interviennent dans la fabrication d'un composant du type précité exposent le substrat à des températures élevées, de l'ordre de 600°C degrés pour certaines d'entre elles. Il convient donc de s'assurer que le matériau du substrat puisse d'une part résister à ces températures et d'autre part respecter ses cotes précises d'origine à l'issu des étapes de fabrication.

Actuellement, seul le verre minéral est capable de répondre à ces prérogatives de manière économique.

Par ailleurs, la réalisation des composants précités sur substrat de verre fait intervenir le dépôt de couches successives en superposition pour former des éléments de structure ou pour créer des couches laminées. Il peut être notamment nécessaire de superposer deux couches ou plus de matériaux différents. Dans ce cas, les différents matériaux en superposition ne possèdent souvent pas les mêmes coefficients de dilatation thermique. Il en résulte que des couches superposées subissent de fortes contraintes mécaniques lorsqu'elles sont exposées à des températures élevées. Ces contraintes, qui agissent par cisaillement à l'interface entre deux couches, peuvent engendrer des micro-fissures ou des craquelures des couches, susceptibles de détériorer les performances ou la durée de vie du composant.

Le document D: PAJ, vol. 016, no. 558 (E-1294), 27 novembre 1992 (1992-11-27) & JP 04 215230 A (OKI ELECTRIC IND CO LTD), 6 août 1992 (1992-08-06) divulgue l'utilisation entre deux substrats de verre d'un panneau à plasma, d'un joint de scellement de type epoxy qui est soumis à une température inférieure à 200°C pendant la fabrication de ce panneau.

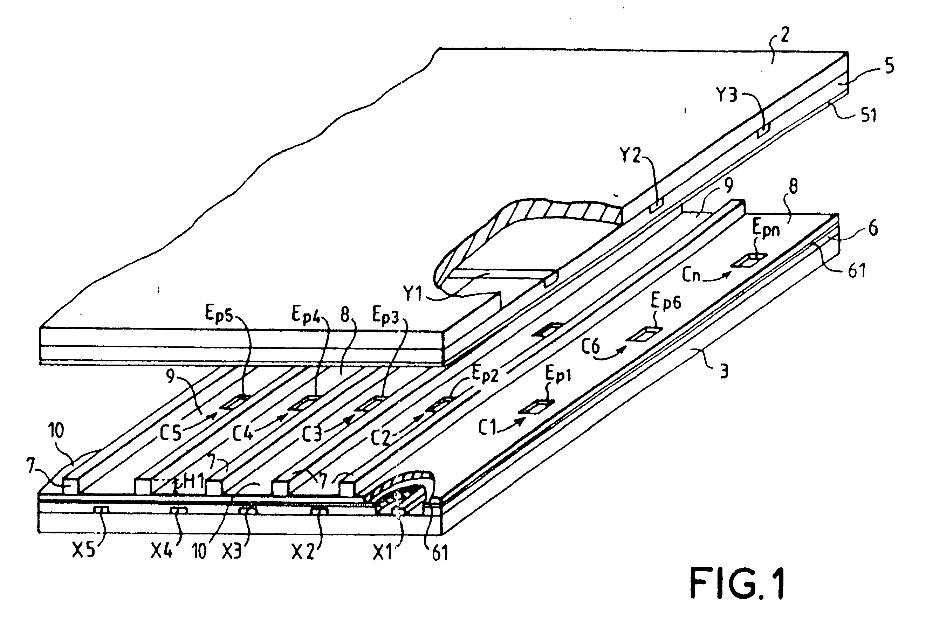

Afin de permettre de mieux comprendre les contraintes subies au niveau d'un substrat lors de la fabrication d'un composant, on considérera, par référence aux figures 1 à 5, l'exemple d'un panneau à plasma (PAP) couleur, réalisé à partir de deux substrats de verre.

Le PAP représenté est du type alternatif à structure matricielle. Son fonctionnement est ainsi basé sur la décharge lumineuse entre deux couches de diélectrique en vis-à-vis, chacune recouverte d'une couche de magnésie (oxyde de magnésium) MgO, et recouvrant un réseau d'électrodes sur un substrat de verre respectif. Un tel panneau est décrit notamment dans la demande No. 97 07181 de la demanderesse.

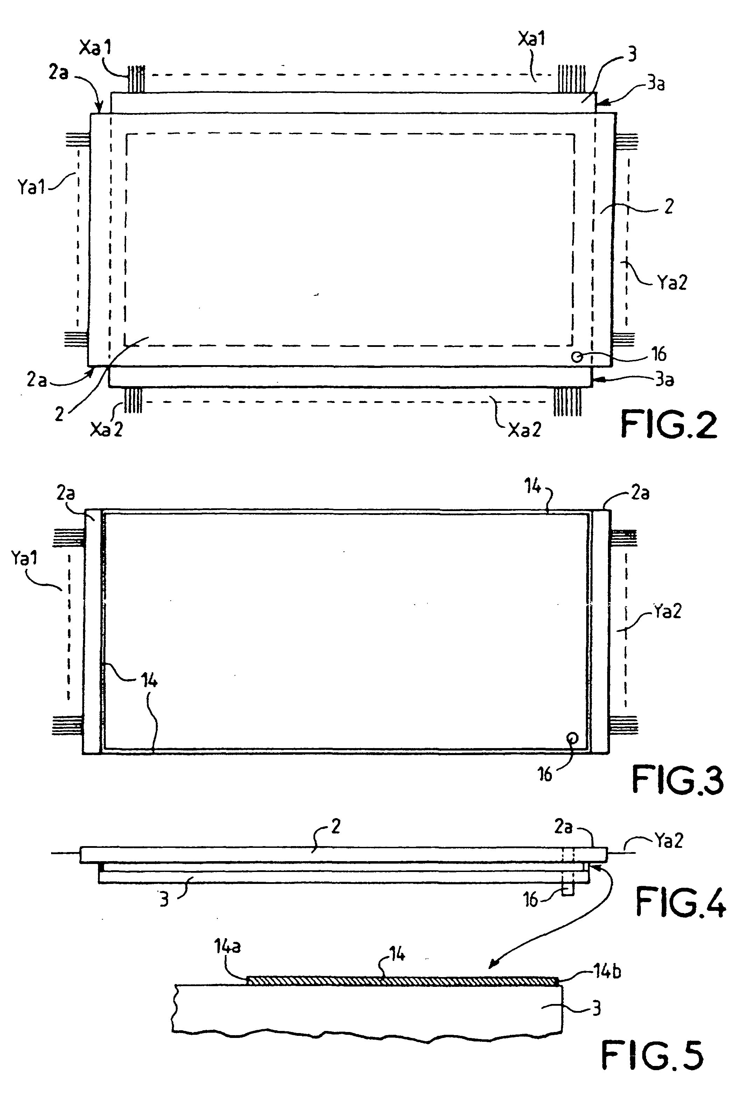

Comme le montre la figure 1, chacun des substrats se présente sous la forme d'une dalle de verre 2, 3 d'une superficie qui correspond au format d'affichage de l'écran plus une portion périphérique comprenant les éléments de connexion et les moyens de scellement des substrats (figures 2 à 5). Ces substrats 2, 3 sont disposés en vis-à-vis avec une faible séparation entre les faces en regard (faces internes) permettant de contenir un gaz de décharge lorsqu'ils sont assemblés.

Le premier substrat 2, destiné à former la face avant du PAP (vis-à-vis de l'observateur), porte un premier réseau d'électrodes parallèles Y1 -Y3 qui constitue les électrodes de ligne. Ces électrodes sont noyées dans une couche épaisse de matériau diélectrique 5. Cette couche est elle-même recouverte d'une couche mince de diélectrique 51, par exemple en magnésie (MgO), qui est destinée à être exposée au gaz de décharge.

Le second substrat 3 porte un second réseau d'électrodes parallèles X1-X5, également noyées dans une couche épaisse de matériau diélectrique 6, elle-même recouverte d'une couche mince de diélectrique 61 destinée à être exposée au gaz de décharge. Ces électrodes sont disposées perpendiculairement aux électrodes Y1-Y3 du premier réseau et constituent les électrodes de colonne.

Le second substrat 3 comporte en outre un ensemble de barrières droites 7 sur la couche mince, une barrière étant disposée le long de chaque axe médian entre deux électrodes de colonne X1-X5 adjacentes.

La surface du second substrat 3 entre les barrières 7 est recouverte par des bandes de luminophore 8, 9, 10 déposées directement sur la couche mince. Chaque bande de luminophore est contenue entre deux barrières adjacentes 7. Ensemble, les bandes forment un motif répétitif de trois bandes adjacentes successives 8, 9, 10 de couleurs d'émission différentes, par exemple rouge, verte et bleue.

Les bandes de luminophore 8, 9, 10 comportent des aires Ep₁-Epₙ de retrait de matière luminophore, à l'aplomb de chaque électrode Y1-Y3 du premier réseau d'électrodes du substrat opposé 2. Ces aires, dénommées «épargnes », exposent ainsi la couche mince de diélectrique directement au gaz de décharge aux points d'intersection des premier et deuxième réseaux d'électrodes. Elles permettent de réaliser des cellules de décharge en correspondance avec ces points.

Ainsi, dans l'exemple représenté, les intersections réalisées par la première électrode ligne Y1 avec les électrodes de colonne X1-X5 définissent une ligne de cellules, chaque cellule étant matérialisée par une épargne : la première cellule C1 est située au niveau de la première épargne Ep₁, la deuxième cellule C2 est située au niveau de la deuxième épargne Ep₂ et ainsi de suite jusqu'à la cinquième épargne Ep₅ représentée qui matérialise une cinquième cellule C5. Les première, deuxième et troisième épargnes Eₚ₁, Eₚ₂, Eₚ₃ sont situées respectivement dans une bande de luminophore verte 8, rouge 9 et bleue 10. Elles correspondent ainsi à des cellules monochromes de trois couleurs différentes qui, à elles trois, peuvent constituer une cellule trichrome.

Les barrières 7 ont un double rôle. D'une part, elles servent à confiner les décharges lumineuses à la cellule qui les engendrent, empêchant notamment la propagation des décharges dans le sens des électrodes de ligne Y1-Y3 par effet d'ionisation. Elles permettent ainsi d'éviter le phénomène de diaphonie entre les cellules. D'autre part, les barrières 7 constituent des écrans pour le rayonnement lumineux d'une cellule vis-à-vis des cellules voisines dans le sens des électrodes de ligne Y1-Y3, évitant un effet de diaphonie qui se traduit par un manque de saturation des couleurs.

Les barrières 7 peuvent aussi avoir une fonction d'entretoisement des substrats 2,3, comme dans l'exemple illustré. Dans ce cas, la hauteur H1 des barrières fixe la séparation entre les dalles, la dalle 2 portant les électrodes ligne Y1-Y3 étant en appui sur le sommet des barrières.

Selon d'autres conceptions, l'espacement entre les substrats 2, 3 est fixé non pas au moyen des barrières, mais par des éléments d'entretoisement répartis sur la surface de l'un au moins des substrats. Ces éléments d'entretoisement, aussi connus sous le terme d'espaceurs, permettent notamment de dégager un espace au-dessus des barrières pour une meilleure distribution de l'ionisation autour des cellules.

La géométrie et le scellement des deux substrats seront maintenant décrits par référence aux figures 2 à 5.

La figure 2 est une vue en plan simplifiée montrant le premier substrat 2 superposé sur le deuxième substrat 3 lorsque le PAP est en phase d'assemblage.

Les électrodes colonne X1, X2, X3, ... et les électrodes ligne Y1, Y2, Y3, ... des substrats respectifs 3 et 2 se prolongent légèrement au-delà des bords de ces derniers afin de former des zones de connexion Xa1, Xa2 et Ya1, Ya2 avec des sorties d'une électronique de commande (non représentée). L'électronique de commande délivre aux électrodes les différentes tensions (de l'ordre de 100 à 150 volts) nécessaires pour amorcer, entretenir ou éteindre sélectivement une décharge lumineuse aux points d'intersection des électrodes ligne et colonne.

Le premier substrat 2 comprend deux zones de connexion Ya1, Ya2 des électrodes Y1, Y2, Y3, ... sur des bords respectifs opposés, perpendiculaires au sens de ces électrodes. Chaque zone de connexion Ya1 ou Ya2 comporte les prolongements d'une électrode colonne sur deux, en alternance avec ceux que comporte l'autre zone de connexion Ya2 ou Ya1.

De même, le deuxième substrat 3 comprend deux zones de connexion Xa1, Xa2 des électrodes X1, X2, X3, ... sur des bords respectifs opposés, perpendiculaires au sens de ces électrodes. Chaque zone de connexion Xa1 ou Xa2 de ce substrat comporte les prolongements d'une électrode ligne sur deux, en alternance avec ceux que comporte l'autre zone de connexion Xa2 ou Xa1.

Afin de faciliter les connexions, les formats respectifs des premier et deuxième substrats 2, 3 sont légèrement différents de manière à ce que, pour chacun de ces derniers, il existe une marge (respectivement 2a et 3a) non recouverte par l'autre substrat. Pour un substrat donné, ces marges 2a, 3a se situent aux deux bords opposés depuis lesquels se prolongent les électrodes de ce substrat.

Le scellement des premier et deuxième substrats 2, 3 est réalisé par un filet de verre 14 sur le périmètre de la zone de recouvrement des substrats (figure 3). Dans l'exemple, le filet de verre 14 est déposé sur le premier substrat 2. Le périmètre du joint vis-à-vis de ce substrat se situe sur les deux bords parallèles aux électrodes ligne Y1, Y2, Y3 de ce substrat 2 et à l'intérieur de la marge 2a situé aux deux autres bords opposés.

On notera que pour des raisons de clarté, la largeur des marges 2a et 3a est représentée de manière très exagérée ; dans la réalité les marges ont une largeur de quelques millimètres seulement alors qu'un côté d'un substrat peut mesurer plusieurs dizaines de centimètres.

La figure 4 est une vue de profil qui montre l'intercalement du joint de scellement 14 vis-à-vis des deux substrats 2, 3. L'épaisseur du joint de scellement correspond à l'espacement entre les deux substrats, qui est établi par la hauteur des barrières. Dans cette figure, l'espacement entre les deux substrats est très exagéré pour des raisons de clarté, le joint de scellement ayant une épaisseur typique d'une centaine de microns pour une largeur de quelques millimètres.

Afin de permettre le pompage à vide de l'espace de décharge contenu entre les deux substrats au sein du périmètre du joint de scellement 14, l'un des substrats (celui 3 destiné à constituer la face arrière du PAP) comporte un queusot 16. Le queusot 16 constitue un moyen d'accès à l'espace de décharge. Il est donc situé à un emplacement du substrat à l'intérieur du périmètre du joint de scellement 14 mais en dehors du réseau d'électrodes. Le queusot est réalisé par un trou traversant dans le substrat, dont l'embouchure extérieure se prolonge par une section de tube en verre formant un téton. Après le pompage à vide et le remplissage du gaz de décharge à faible pression, le téton est obturé par fusion de son ouverture.

La figure 5 représente, à une plus juste échelle, le profil du joint de scellement 14 en contact avec le deuxième substrat 3.

On comprendra de ce qui précède que le fonctionnement correct du PAP exige un très haut degré de précision d'alignement, en fin de réalisation et d'assemblage, d'une part entre les éléments superposés sur substrat (électrodes, barrières, épargnes, luminophores), et d'autre part entre les premier et deuxième substrats scellés ensemble.

Cette précision d'alignement requise est d'autant plus grande que la structure du dispositif d'affichage est complexe et que sa définition est élevée. A titre d'exemple, un PAP du type décrit ayant un écran au format télévision de 107 cm diagonale et une définition horizontale de 560 lignes nécessite une précision d'alignement relative des éléments précités de l'ordre de 30 ppm (parties par million), soit 0,003%.

La réalisation des différents éléments superposés sur les substrats de verre et le scellement de ces derniers fait intervenir des étapes de cuisson qui doivent s'effectuer classiquement à des températures élevées. Or, les substrats de verre peuvent subir à de telles températures des déformations nuisibles à cette précision.

De manière générale, les substrats 2, 3 subissent une première opération de cuisson lors du dépôt des couches diélectriques épaisses 5, 6. Ces couches épaisses 5, 6 noient les électrodes X1-X5 ou Y1-Y3 qui ont été préalablement déposées sur les substrats respectifs par des étapes de métallisation. Typiquement, le matériau diélectrique servant à ces couches est un minéral tel qu'un borosilicate de plomb. Lors du dépôt sur le substrat, il se présente sous la forme de fritte de verre en suspension dans un liant pour permettre un dépôt en phase liquide. Ce dépôt s'effectue selon diverses techniques telles que la sérigraphie, le dépôt à la tournette, etc.

Une fois cette couche déposée, les substrats 2, 3 sont soumis à une étape de cuisson destinée à brûler le liant et à mettre la fritte de verre en fusion. La température de cuisson doit donc être au moins égale à la température de fusion du diélectrique, qui est de 580°C pour le cas d'un diélectrique en borosilicate de plomb.

L'un au moins des substrats subit une deuxième étape de cuisson pour stabiliser les barrières 11 et, le cas échéant, les espaceurs spécifiques.

Les barrières sont typiquement formées sur la couche mince de diélectrique par une succession de dépôts d'un précurseur en phase liquide. Ce précurseur comporte une résine photosensible et une charge inorganique telle qu'un verre minéral, cette charge constituant le matériau des barrières. Normalement, ce matériau nécessite d'être fortement fritté, à une température aux environs de 500°C. La couche peut être déposée par diverses techniques, telles que la pulvérisation, la vaporisation ou le dépôt par tournette.

Le motif des barrières est formé par des techniques de photolithographie appliquées successivement sur chaque couche cumulée de précurseur jusqu'à ce que la hauteur de barrière requise soit obtenue.

Une fois ces opérations effectuées, les couches successives sont cuites à une température de l'ordre de 480°C à 550°C. Cette étape de cuisson a pour but d'éliminer toute trace du liant photosensible et de fusionner les particules frittées qui constituent les barrières.

Le substrat 3 portant les barrières subit une troisième cuisson suite au dépôt des bandes de luminophore entre les barrières. Chacune des trois couleurs d'émission est obtenue par un luminophore spécifique, déposé indépendamment des autres sous forme de couche. Le motif en bandes pour chaque couche de luminophore est réalisé par des techniques de photolithographie. La cuisson a pour but de brûler le liant photosensible et de stabiliser les couches de luminophore. Elle s'effectue typiquement à une température entre 400°C et 510°C.

Une quatrième étape de cuisson, subie par les deux substrats 2, 3, intervient lors du scellement de l'espace de décharge gazeux entre ces substrats.

Dans l'état de la technique, le scellement est réalisé par un filet de pâte de verre déposé sur le pourtour d'au moins l'un des substrats 3, comme décrit plus haut par référence aux figures 3 à 5. On utilise classiquement pour cette pâte un verre à borosilicate de plomb. Le verre peut être sous une forme vitrifiable ou dévitrifiable selon la technique utilisée. La pâte de verre est généralement déposée au moyen d'une seringue. Lorsque les deux substrats sont réunis en vis-à-vis, l'ensemble est soumis à une cuisson visant à durcir la pâte de verre afin de figer les substrats dans leur configuration définitive.

La cuisson pour cette étape de scellement s'effectue à la température de fusion du verre de scellement, qui se situe entre 420°C et 450°C.

Une fois les substrats 2,3 scellés, on effectue une opération de pompage à vide à travers le queusot 16 pour évacuer l'air confiné dans l'espace de décharge. Ensuite, on introduit dans cet espace un mélange gazeux à faible pression (500 à 800 mbar), permettant d'obtenir les conditions de décharge plasma. Le queusot 16 est alors scellé en obturant son téton de verre par fusion.

Pour résumer, dans la plupart des procédés actuels de fabrication des panneaux à plasma, on trouve les étapes de cuisson suivantes:
1. cuisson des couches diélectriques, à des températures voisines de 580°C,
2. cuisson des barrières (éventuellement avec espaceurs), à des températures de 480°C à 550°C,
3. cuisson des luminophores, à des températures de 400°C à 510°C, et
4. cuisson du filet de pâte de verre pour le scellement du PAP, à des températures voisines de 450°C.

Chaque cuisson à température élevée engendre une déformation du substrat, si bien que les pertes de précision sont cumulées durant l'ensemble des étapes de fabrication. Aussi, il serait avantageux de pouvoir réduire la température de cuisson ne serait-ce que pour une seule des étapes.

Les substrats de verre classiquement utilisés sont tous en verre sodo-calcique, avec une température de transition vitreuse Tg d'environ 520°C. Ce type de verre se compacte fortement, à raison de 400 à 600 ppm, lors des cuissons à des températures autour 600°C s'il n'est pas préalablement stabilisé.

Le verre peut être stabilisé à un certain point par une cuisson initiale à environ 580°C avant de l'utiliser comme substrat. Toutefois, malgré cette stabilisation initiale, le verre tend à se déformer lors des étapes de cuisson à des températures à 480°C et plus.

Il existe depuis peu des verres de composition différente de celle du verre sodo-calcique qui permettent de mieux préserver les tolérances initiales après des étapes de cuisson. Ces verres ont des températures de transition vitreuse Tg plus élevées, allant à environ 580°C à 620°C. Ils nécessitent également d'être précuits pour stabilisation, mais ils répondent alors bien mieux aux tolérances de stabilité dimensionnelle. Leurs dimensions restent alors sensiblement stables, les écarts restant inférieurs à 10 à 30 ppm. Cependant, ces verres ne sont généralement pas adoptés pour des composants tels que les écrans plats en raison de leur prix encore trop élevé.

Au vu de ces problèmes, un objet de la présente invention est de prévenir le risque de formation de micro-fissures ou de craquelures dans les éléments de structure ou les couches du composant formé sur substrats de verre, notamment au niveau de la couche mince de diélectrique en magnésie formée sur la couche diélectrique dans le cas d'un panneau à plasma alternatif, par exemple.

A cette fin, l'invention propose un procédé de fabrication de composants, selon la revendication 1.

Autrement dit, l'invention permet de réduire la température de 150°C à 200° C par rapport aux techniques classiques de scellement réalisées avec un joint en verre qui nécessite alors une fusion à une température de l'ordre de 450°C.

Il s'avère qu'une telle diminution de température a une influence importante sur les effets de micro-fissures ou de craquèlements des éléments déposés en couche, surtout en ce qui concerne la couche mince de matériau diélectrique inorganique (par exemple en MgO) formant la surface de décharge dans le cas d'un panneau à plasma.

En effet, en raison des coefficients de dilatation thermique différents entre le verre, le diélectrique et le MgO, on peut avoir des craquelures dans la couche mince de MgO lorsque l'on atteint une température d'environ 400°C. Aussi, le scellement à basse température grâce à l'invention permet de s'éloigner de cette limite.

Par ailleurs, un verre sodo-calcique classique demeure sensiblement stable à la température de cuisson pour l'étape de scellement selon l'invention. Cette cuisson est également l'une des plus critiques car elle est susceptible d'affecter le positionnement relatif des premier et deuxième substrats.

Aussi, le procédé selon l'invention contribue à une amélioration dans la précision géométrique du composant sans avoir à abandonner pour autant l'emploi du verre sodo-calcique comme matériau pour les substrats.

De préférence, on utilise un matériau du type polyvinylbutyrate (PVB), car ce matériau présente un faible dégazage aux températures de traitement ci-dessus.

L'invention est d'autant plus surprenante que l'utilisation d'un epoxy ou du PVB pour le joint de scellement semble proscrit dans une première analyse, car ces matériaux sont généralement présentés comme étant perméables à la vapeur d'eau. Or, la diffusion de vapeur d'eau à travers le joint aurait comme conséquence une pollution de l'espace scellé, par exemple l'espace contenant le gaz de décharge dans le cas d'un panneau à plasma, et donc une dégradation du fonctionnement du composant.

Cependant, la demanderesse a découvert de manière inattendue que cette perméabilité intrinsèque du matériau ne se traduit pas par une perte de qualité du scellement des substrats de verre.

Avantageusement, le joint de scellement est très mince relativement à sa largeur, cette largeur étant définie comme la séparation entre les bords interne et externe de celle-ci. Avec cette configuration, le rapport entre la section exposée du joint de scellement à la distance d'un bord à l'autre du joint est faible, ce qui favorise l'étanchéité. Ce rapport peut être de l'ordre de 1:n, où n est de 20 ou plus, de préférence supérieur à 30, voire supérieur à 40.

De préférence, on applique une pression sur le joint de scellement lors de l'étape de scellement. Cette pression peut être égale ou supérieure à 1 kg/cm², voire supérieure à 2 kg/cm².

Lorsque la fabrication du composant nécessite un pompage de l'espace entre les premier et deuxième substrats via un moyen d'accès à cet espace, tel qu'un queusot prévu sur l'un des substrats, ce moyen peut aussi être scellé au moyen d'un matériau organique à base d'epoxy ou de polyvinylbutyrate.

On note que l'utilisation d'un joint de scellement en un matériau organique conformément à l'invention permet également d'utiliser des matériaux organiques pour former des couches ou des éléments de structure du composant. Il en ressort que ces couches ou éléments de structure peuvent être réalisés par des techniques ne nécessitant que des cuissons à des températures relativement basses, à l'instar de l'étape de durcissement du joint de scellement.

On va donc interposer au moins une couche de matériau organique entre le joint de scellement et l'un au moins des substrats. Le joint de scellement peut alors reposer, directement ou indirectement, contre au moins une couche de matériau organique, par exemple la couche de diélectrique qui recouvre le substrat d'un panneau à plasma.

Aussi, lorsque l'un au moins des substrats nécessite le dépôt d'une couche de diélectrique, celle-ci est réalisée par une étape de dépôt en couche mince d'un matériau organique demandant une température de stabilisation inférieure à une température de déformation du substrat.

Parmi les matériaux diélectriques répondant à cette exigence, on peut citer des polyphenylquinoxalines (PPQ) ou des polyimides (PI). Ces matériaux se stabilisent à des températures entre 300°C et 400°C sur une période de 20 à 60 minutes. De la sorte, le substrat ne subi pas de dégradation sensible de ses cotes d'origine durant cette étape de stabilisation de la couche diélectrique. Ces couches de matériau diélectrique peuvent être déposées sous forme de couches de 3 à 20 microns, et de préférence de 5 à 15 microns d'épaisseur.

La couche diélectrique ainsi obtenue est d'un aspect naturel transparent. Il est possible d'adjoindre aux matériaux diélectriques des agents colorants selon les applications. A titre d'exemple, on peut obtenir une couche diélectrique (ou plusieurs) d'aspect blanc, permettant notamment d'augmenter le rendement lumineux dans le cas d'un panneau à plasma. Cet aspect blanc peut être obtenu par l'adjonction d'oxyde de titane au matériau diélectrique.

Il est par ailleurs possible d'ajouter une charge de microbilles de verre au matériau diélectrique précité pour préserver la transparence de la ou des couche(s) de diélectrique. Cette disposition peut être utile notamment pour une opération d'insolation du matériau photosensible.

Avantageusement, on dépose sur cette couche diélectrique une couche superficielle mince d'un matériau diélectrique, tel que de l'oxyde de magnésium (MgO), par une technique à froid telle que la pulvérisation ou le dépôt au canon.

Lorsque la fabrication du composant comprend également la réalisation d'éléments de relief portés au moins par l'un des substrats, tels que des barrières dans le cas d'un panneau à plasma, un mode de mise en oeuvre préféré de l'invention prévoit de réaliser ces éléments dans une technologie qui ne demande pas de cuisson à plus de 400°C.

A cette fin, on peut utiliser pour ces éléments des matériaux organiques comme des polyimides. De tels matériaux peuvent être photosensibles.

Ces composés organiques peuvent être chargés avec au moins un additif minéral pour en modifier la couleur et/ou la résistance au fluage. L'augmentation de la résistance ainsi obtenue peut être avantageuse lorsque ces éléments subissent des contraintes élevés, comme dans le cas des barrières d'un PAP, qui subissent des fortes pressions au moment du pompage.

Comme pour le cas de la couche diélectrique, on peut ajouter au matériau constitutif des éléments de relief une charge de microbilles de verre pour conserver une bonne transparence de la couche lors de l'opération d'insolation du matériau photosensible.

L'invention concerne également un dispositif d'affichage, par exemple un panneau à plasma ou un dispositif d'affichage par émission de champ, comprenant un premier et un deuxième substrats scellés l'un vis-à-vis de l'autre par un joint de scellement, caractérisé en ce que joint de scellement est réalisé en un matériau du type epoxy ou polyvinylbutyrate.

D'autres avantages et caractéristiques de l'invention apparaîtront plus clairement à la lecture des modes de réalisation qui suivent, donnés purement à titre d'exemple non limitatif, par référence au dessins annexés dans lesquels :
- la figure 1, déjà décrite, est une vue générale d'un panneau à plasma couleur connu, du type alternatif à structure matriciel;
- la figure 2 est une vue de plan simplifiée montrant le positionnement relatif des deux substrats du panneau à plasma de la figure 1;
- la figure 3 est une vue de plan simplifiée de l'un des substrats représentés à la figure 2, montrant l'emplacement d'un joint de scellement;
- la figure 4 est une vue de profile des deux substrats représentés à la figure 2; et
- la figure 5 est une vue agrandie d'une partie de la figure 4 autour du joint de scellement;

L'exemple qui sera donné d'un procédé conforme à la présente invention se situe dans le contexte d'un panneau à plasma (PAP) couleur du type alternatif, tel que décrit par référence aux figures 1 à 5. Cette description sera donc considérée comme intégrée aux exemples qui suivent et ne sera pas répétée par souci de concision; seules les différences propres aux divers aspects de l'invention seront explicitées.

On commence par les étapes de préparation des substrats 2, 3. Ces substrats se présentent sous la forme de dalles de verre sodo-calcique de qualité optique, ou proche de ce niveau de qualité. Dans le cas de réalisation d'un PAP au format télévision 104 cm de diagonale, l'épaisseur des dalles est de l'ordre de 3 mm.

Dans l'exemple considéré, l'ensemble des opérations de fabrication du PAP ne nécessite aucune étape de cuisson à des températures au-delà de 400°C-440°C. En conséquence, les substrats de verre 2,3 ne subissent pas de contraintes susceptibles de provoquer une déformation importante de leur cotes d'origine. Aussi, les substrats dans cet exemple ne sont pas soumis à un traitement thermique initial visant à les stabiliser, bien qu'un tel traitement puisse néanmoins être envisagé tout en restant dans le cadre de l'invention.

On procède initialement au dépôt des réseaux d'électrodes X1, X2, X3,... et Y1, Y2, Y3, ... sur l'une des surfaces des substrats respectifs 3 et 2. Les extrémités débordantes des électrodes, permettant la connexion à la sortie d'une électronique de commande, (cf. figures 2 et 3) sont aussi réalisées durant cette opération.

Le procédé de dépôt de ces électrodes est classique. On peut utiliser par exemple le dépôt par photolithographie. Les électrodes ont une structure laminée de deux métaux différents, par exemple une séquence chrome-cuivre-chrome. Chaque couche de la séquence est déposée à froid séparément. Toutefois, il peut être envisagé de réaliser les électrodes par dépôt d'une couche unique d'aluminium ou d'argent en procédant, le cas échéant, par une étape de cuisson.

Après dépôt des couches de métallisation, les substrats sont soumis à une cuisson visant à stabiliser les électrodes sur la surface du verre. Cette étape de cuisson s'effectue normalement à des températures relativement basses et ne nuit pas à la précision géométrique initiale des substrats.

Ensuite, on procède à l'étape de dépôt des couches de diélectrique 5, 6 sur les substrats respectifs 2, 3. Ces couches recouvrent toute la surface utile des substrats et noient les réseaux d'électrodes.

Afin de permettre une stabilisation de ces couches par une cuisson à température relativement basse, celles-ci sont réalisées à partir d'un matériau organique déposé en couche mince. L'épaisseur de la couche est fonction, entre autres, de la constante diélectrique relative εr. Elle sera normalement de 2 à 20 microns, et dans la plupart des cas comprise entre 5 et 12 microns pour une constante diélectrique relative εr comprise entre 2 et 4.

Ce matériau peut être de la famille des polyphenylquinoxalines (PPQ) ou des polyimides (PI). Cependant, on peut envisager à cette fin tout matériau organique pouvant être déposé en couche mince.

Dans l'exemple, la couche de matériau organique est un polyimide qui présente les caractéristiques suivantes :
- transparence à la lumière visible,
- une épaisseur comprise entre 5 et 12 microns, compte tenu du fait que la constante diélectrique relative εr est entre 2 et 4,
- une tenue en tension supérieure à 400 V pour une épaisseur de couche de 5 microns, et
- compatibilité avec le coefficient de dilatation du verre du substrat.

Le dépôt du matériau organique s'effectue en phase liquide selon des techniques connues : sérigraphie, au trempé ou au rouleau. La phase liquide comprend la charge du matériau organique dans un solvant adapté. Elle peut comprendre en outre un agent photosensible pour permettre un traitement par photogravure.

La couche mince ainsi obtenue est d'abord séchée à une température de l'ordre de 100°C, par exemple au moyen d'un couteau d'air chaud.

Ensuite, la couche est durcie sur le substrat lors d'une étape de stabilisation qui s'effectue à une température comprise entre 300°C et 400°C. La durée de cette étape de stabilisation est d'environ 20 à 60 minutes.

Selon les besoins, il est possible de rendre un aspect foncé ou blanc, voire coloré, à la couche diélectrique par addition de colorant au matériau organique précurseur. Ainsi, l'addition d'oxyde de titane au matériau organique permettra d'obtenir une couche diélectrique blanche utile pour augmenter le rendement lumineux du PAP.

Dans l'exemple, on dépose pour chacun des deux substrats 2, 3 une couche mince superficielle d'oxyde de magnésium (MgO) 51 et 61 sur les couches de diélectrique respectives 5 et 6 (figure 1). Ces couches superficielles 51 et 61 sont déposées par une technique à froid telle que la pulvérisation ou le dépôt par canon à une épaisseur de l'ordre de 0,5 µm. L'oxyde de magnésium présente une stabilité chimique et un coefficient d'émission secondaires adaptés au rôle d'interface avec le gaz de décharge et supportent bien les points d'arc durant les décharges plasma.

Une fois les couches de matériau diélectrique déposées, on procède à la réalisation des barrières 7. Dans l'exemple considéré, ces barrières ne sont présentes que sur le deuxième substrat 3.

Les barrières sont réalisées par photogravure sur des couches de matériau précurseur organiques photosensibles. Un tel matériau peut être un polyimide.

Dans l'exemple, on prépare la phase liquide pour la couche à partir d'un solvant et d'une charge de polyimide. Cette phase liquide est suffisamment photosensible pour permettre d'utiliser des techniques de photogravure, soit en raison des caractéristiques inhérentes au polyimide et/ou du solvant, soit par adjonction d'un agent de photosensibilisation. Des composés organiques photosensibles à base de polyimide, susceptibles de remplir cette fonction, sont disponibles dans le commerce.

Si nécessaire, le matériau organique peut être chargé avec un additif minéral pour en modifier soit la couleur, soit la résistance au fluage lors de la phase de pompage à vide du panneau (durant laquelle la pression peut atteindre environ 10⁶ Pascals, soit 10 kg/cm²). On peut aussi ajouter une charge de microbilles de verre pour conserver une bonne transparence de la couche lors de l'opération d'insolation du matériau photosensible.

La phase liquide est précitée et déposée sur le diélectrique 7 du deuxième substrat 3 de manière à former une couche d'une épaisseur de l'ordre de 20 microns. On peut réaliser cette couche avec les mêmes techniques de dépôt que pour la couche diélectrique: dépôt par sérigraphie, au trempé, etc.

Cette couche organique est alors séchée par un couteau d'air à une température d'environ 100°C.

Ensuite, on appose sur la couche organique un masque de photolithographie présentant un motif d'ouvertures longiformes calqué sur le motif des barrières à imprimer. On expose les parties de la couche révélées par le masque à un rayonnement ultraviolet de manière à les rendre résistantes au développement. On développe alors la couche à l'eau additionnée de carbonate, puis on sèche la surface à l'aide d'un couteau d'air.

On obtient alors un motif en relief, à l'image des barrières, d'une hauteur correspondant à l'épaisseur de la couche de matériau organique, soit environ 20 microns.

Afin d'atteindre la hauteur requise pour les barrières, c'est-à-dire de l'ordre de 100 microns, on réitère autant de fois que nécessaire toutes les étapes précitées, du dépôt de la couche de matériau organique en phase liquide jusqu'au développement après insolation, chaque itération augmentant la hauteur de l'épaisseur d'une couche.

Suivant le nombre d'itérations, on modifie le positionnement vertical du masque de sérigraphie ou la profondeur de celui-ci pour tenir compte de l'évolution des dépôts subsistant sur la dalle.

A l'issu des cycles de photolithographie, on effectue une polymérisation de la structure de barrières ainsi obtenue par une étape de cuisson à température basse relativement à la température de déformation du substrat. Typiquement, cette cuisson est réalisée à une température de 300°C à 400°C durant une période d'environ 20 à 60 minutes.

Si le matériau organique s'y prête, il est également possible d'envisager une stabilisation de la structure de barrières par un traitement photonique, en utilisant par exemple une insolation à la lumière ultraviolette. Ce traitement peut soit remplacer la cuisson précitée, soit venir en complément de celle-ci.

Une fois les barrières réalisées, on procède au dépôt des couches de luminophore par photolithographie. Dans le PAP représenté à la figure 1, ces couches forment des bandes, chacune occupant la surface entre deux barrières adjacentes 7. Les bandes successives forment un motif répétitif de groupes de trois bandes adjacentes, chacune de ces dernières ayant respectivement une couleur d'émission dans le vert, le rouge et le bleu.

Le luminophore correspondant à l'une des couleurs d'émission (par exemple le vert) est préparé sous la forme d'un liquide comprenant une résine photosensible et des fines particules de matériau luminophore en suspension.

On disperse ce liquide sous forme de couche sur toute la surface interne du substrat 3 selon les mêmes techniques qu'utilisées pour le dépôt des barrières 7.

Après séchage de la couche, on appose sur la face interne du substrat 3 un masque de photolithographie qui n'expose que toutes les troisièmes bandes de surface entre les barrières 7 à partir d'un point de référence, les deux autres bandes et les sommets des barrières étant masqués. Le masque obture également, dans les bandes exposées, les portions de surface qui correspondent aux épargnes EP₁-EP₂ dans le luminophore. On effectue une photosensibilisation des surfaces exposées en appliquant un rayonnement ultraviolet à travers le masque.

On développe la couche afin de retirer toutes les parties non-exposées, laissant ainsi sur le diélectrique des bandes de luminophore 9 d'une même couleur d'émission à tous les troisièmes emplacements entre deux barrières voisines.

Ces opérations sont répétées pour les deux autres couches de luminophore. Chaque nouvelle couche est déposée en phase liquide sur toute la surface du substrat 3, y compris sur les bandes de luminophore précédemment déposées. Pour l'étape de photosensibilisation, on utilise le même masque, mais en le plaçant décalé d'une largeur de bande par rapport à l'utilisation précédente, de manière à former le motif de bandes successives de couleurs différentes.

A l'issu des étapes de dépôt des trois luminophores, on effectue une cuisson de celles-ci à une température comprise entre 380°C et 440°C. De préférence, on utilise une température n'excédant pas 420°C.

Ensuite, on procède aux étapes d'assemblage et de scellement des premier et deuxième substrats 2 et 3.

On commence par la préparation du joint de scellement 14. Conformément à la présente invention, celui-ci est réalisé à partir d'un matériau du type epoxy ou polyvinylbutyrate, qui autorise un traitement à une température relativement basse comprise entre 200°C et 300°C. Ce type de matériau est disponible dans le commerce, étant notamment utilisé comme couche intercalaire pour les verres feuilletés de vitrage automobile.

La forme et le positionnement du joint de scellement 14 sont sensiblement comme décrit précédemment par référence aux figures 3 à 5. En particulier, l'épaisseur du joint de scellement 14, fixée par la hauteur des barrières lorsque celles-ci ont le rôle additionnel d'espaceurs, est le l'ordre de 100 microns. La largeur du joint 14 (distance entre les bords intérieur 14a et extérieur 14b, figure 5) est de l'ordre de quelques millimètres, par exemple 5 mm dans le cas d'espèce. On remarque donc que la largeur du joint de scellement est ici environ 50 fois supérieure à son épaisseur.

Le joint de scellement 14 est peut être déposé sur l'un des substrats (ou éventuellement les deux substrats) selon diverses techniques.

Il est possible de préparer le joint de scellement 14 sous forme de pellicule souple d'epoxy ou de PVB découpée selon la forme du joint, c'est-à-dire en forme de cadre définissant le périmètre de l'espace gazeux à sceller (figure 3). Dans ce cas, la pellicule est déposée, à chaud ou à froid, sur l'un des substrats, directement sur la surface diélectrique 5 ou 6. L'épaisseur de la pellicule peut être légèrement supérieure à la séparation requise pour les deux substrats, en raison du tassement possible de celle-ci sous la pression exercée par les substrats.

Il est également envisageable de préparer le matériau du joint (epoxy ou PVB) sous forme de pâte permettant un dépôt à la seringue (ou par une technique similaire) directement sur l'un des substrats (ou les deux). Une couche de matériau de joint de scellement peut ainsi être formé par un déplacement relatif entre le substrat récepteur de la couche et une tête d'application de cette couche, par exemple au moyen d'un bras robot. Le déplacement relatif peut alors être programmé pour suivre le pourtour du substrat (figures 3 à 5).

Dans ce cas, il est aussi possible de déposer le matériau du joint de scellement en surépaisseur, la couche se tassant automatiquement sous la pression pour adopter la bonne hauteur.

On superpose ensuite les deux substrats 2, 3 avec le joint de scellement 14 interposé. L'ensemble est alors soumis à un traitement à une température comprise entre 200°C et 300°C visant à figer le matériau du joint de scellement et à fixer celui-ci contre les surfaces de contact des substrats. La durée de ce traitement de l'ordre de 30 à 60 minutes. Un pression de l'ordre de 2 à 4 kg/cm² est appliquée sur le joint de scellement durant cette opération.

Ensuite, on procède au pompage à vide de l'espace contenu entre les deux substrats au sein du joint de scellement 14.

Le pompage est effectué, via le queusot 16 (figures 3 à 5), à une température située entre 180°C et 250° C. La durée de cette opération est de quelques heures avec divers moyens d'accélération du pompage, tels que des getters.

Il est constaté que le matériau utilisé pour le joint de scellement, qu'il s'agisse de l'epoxy ou du PVB, résiste de manière satisfaisante à cette opération de pompage à température.

A l'issu du pompage à vide et du remplissage de l'espace avec un gaz de décharge, on scelle le queusot 16. Le scellement du queusot 16 peut être réalisé en obturant celui-ci par dépôt du matériau utiliser pour le joint de scellement, à savoir de l'epoxy ou du polyvinylbutyrate (PVB). Dans ce cas, le matériau peut être injecté dans le queusot 16 de manière à former un bouchon dans le tube formant téton. La stabilisation du matériau de scellement du queusot peut être effectuée par un traitement thermique locale à une température de 200°C à 300°C, par exemple en utilisant un jet d'air chaud.

On remarque dans l'exemple donné que l'on utilise pour la réalisation des différentes étapes du procédé (dépôts de diélectrique épais, barrières, luminophores, joint de scellement) des matériaux qui demandent des températures de stabilisation qui peuvent rester inférieures à 400-440°C. Or, pour des températures inférieures à 440° C, le verre sodo-calcique n'évolue pas en dimension sur des durées de quelques heures. Le verre sodo-calcique, même non stabilisé, est alors complètement compatible avec un procédé de fabrication de panneau à plasma couleur de type alternatif, ou d'autres composants demandant des tolérances similaires.

La présente invention n'est nullement limitée à l'exemple donné, tant sur le plan du type de composant concerné que par le choix des matériaux et des procédés mis en oeuvre pour les différentes étapes de fabrication. On notera entre autres que les techniques décrites concernant le dépôt de la couche diélectrique sur le substrat ou de la réalisation des barrières peuvent être remplacées par des techniques classiquement utilisées, tout en restant dans le cadre de l'invention, même si elles nécessitent des températures supérieures à celles indiquées. En effet, comme expliqué en introduction, l'invention vise en premier lieu une contribution à la réduction des effets de déformation du ou des substrats lors de l'étape de stabilisation du joint de scellement des substrats, grâce à une réduction de la température de traitement rendue possible. Les choix de matériau pour la couche diélectrique ou pour les barrières, permettant aussi une réduction de la température de stabilisation de ces éléments, doivent être considérés comme des aspects optionnels de l'invention offrant des améliorations additionnelles au niveau de la stabilité des substrats.

## Revendications

1. Procédé de fabrication de composants du type comportant un premier et un deuxième substrats de verre (2, 3) scellés l'un vis-à-vis de l'autre par un joint de scellement (14), **caractérisé en ce que** l'on réalise sur au moins l'un des substrats (2, 3) au moins une couche (5, 6, 7) en matériau organique, **en ce que** l'on utilise pour le joint de scellement (14) un matériau du type époxy ou polyvinylbutyrate (PVB), et **en ce que** l'on soumet le joint de scellement (14) à une température de traitement comprise entre 200° C et 300°C après positionnement des premier et deuxième substrats (2, 3).

2. Procédé selon la revendication 1, **caractérisé en ce que** l'on utilise pour le joint de scellement (14) un polyvinylbutyrate (PVB).

3. Procédé selon l'une quelconque des revendications 1 et 2, **caractérisé en ce que** l'on applique, lors de l'étape de scellement, une pression sur le joint de scellement (14) égale ou supérieure à 1 kg/cm², et de préférence supérieure à 2kg/cm2.

4. Procédé selon l'une quelconque des revendications 1 à 3, **caractérisé en ce que** le joint de scellement (14) forme une couche mince, l'épaisseur du joint de scellement relativement à sa largeur, définie comme la séparation entre les bords interne et externe (14a, 14b) du joint, étant de 1:n, où n est de l'ordre de 20 ou plus, de préférence supérieur à 30 et de manière plus préférentielle supérieur à 40.

5. Procédé selon l'une quelconque des revendications 1 à 4, **caractérisé en ce que** les substrats (2, 3) sont réalisés en verre sodocalcique.

6. Procédé selon l'une quelconque des revendications 1 à 5, comportant en outre une étape de pompage de l'espace contenu entre les premier et deuxième substrats (2, 3) via un moyen (16) d'accès à cet espace, **caractérisé en ce que** l'on scelle ce moyen d'accès après pompage au moyen d'un matériau organique à base d'époxy ou de polyvinylbutyrate.

7. Procédé selon l'une quelconque des revendications précédentes, **caractérisé en ce que** l'on dépose sur au moins l'un des substrats (2, 3) au moins une couche diélectrique (5, 6) en matériau organique.

8. Procédé selon la revendication 7, **caractérisé en ce que** l'on dépose sur ladite couche diélectrique (5, 6) en matériau organique une couche mince de matériau diélectrique (51, 61), par exemple l'oxyde de magnésium (MgO), par une technique de dépôt à froid.

9. Procédé selon l'une quelconque des revendications 1 à 8, **caractérisé en ce que** l'on interpose au moins une couche de matériau organique entre le joint de scellement (14) et l'un au moins des substrats (2, 3).

10. Procédé selon l'une quelconque des revendications 1 à 9, dans lequel on dépose sur l'un au moins des substrats (2, 3) une couche de diélectrique (5, 6), **caractérisé en ce que** ladite couche (5, 6) est réalisée par une étape de dépôt en couche mince d'un matériau choisi parmi les polyphénylquinoxalines (PPQ) et les polyimides (PI).

11. Procédé selon la revendication 10, **caractérisé en ce que** l'on stabilise la couche diélectrique (5, 6) à une température comprise entre 300°C et 400°C.

12. Procédé selon la revendication 10 ou 11, **caractérisé en ce que** la couche diélectrique (5, 6) est formée avec une épaisseur de 3 à 20 microns, et de préférence de 5 à 15 microns.

13. Procédé selon l'une quelconque des revendications 10 à 12, **caractérisé en ce que** l'on ajoute au matériau destiné à former la couche diélectrique (5, 6) un agent colorant, par exemple de l'oxyde de titane.

14. Procédé selon l'une quelconque des revendications 10 à 13, **caractérisé en ce que** l'on ajoute au matériau destiné à former la couche diélectrique (5, 6) une charge de microbilles de verre.

15. Procédé selon l'une quelconque des revendications 1 à 14, comprenant en outre la réalisation d'éléments de relief portés par au moins l'un des substrats (3), tels que des barrières (7) dans le cas d'un panneau à plasma, **caractérisé en ce que** l'on réalise ces éléments à partir d'un matériau qui ne demande pas de cuisson à plus de 400°C.

16. Procédé selon la revendication 15, **caractérisé en ce que** ledit matériau utilisé pour la réalisation d'éléments de relief (7) est un polyimide.

17. Procédé selon la revendication 15 ou 16, **caractérisé en ce que** l'on ajoute audit matériau utilisé pour la réalisation d'éléments de relief (7) au moins un additif minéral pour en modifier la couleur et/ou la résistance au fluage.

18. Procédé selon l'une quelconque des revendications 15 à 17, **caractérisé en ce que** l'on ajoute au matériau constitutif des éléments de relief (7) une charge de microbilles de verre.

19. Utilisation du procédé selon l'une quelconque des revendications 1 à 18 pour la fabrication d'un panneauà plasma.

20. Panneau à plasma comportant des premier et deuxième substrats (2, 3) scellés par un joint de scellement (14), **caractérisé en ce que** le joint de scellement (14) est réalisé en un matériau du type époxy ou polyvinylbutyrate (PVB) et **en ce que** au moins l'un des substrats (2, 3) supporte au moins une couche (5, 6, 7) en matériau organique.

## Claims

1. Process for manufacturing components of the type comprising first and second glass substrates (2, 3) which are sealed one with respect to the other by a seal (14), **characterized in that** at least one layer (5, 6, 7) of organic material is produced on at least one of the substrates (2, 3), **in that** a material of the epoxy or polyvinyl butyrate (PVB) type is used for the seal (14) and **in that** the seal (14) is subjected to a treatment temperature of between 200°C and 300°C after the first and second substrates (2, 3) have been positioned.

2. Process according to Claim 1, **characterized in that** a polyvinyl butyrate (PVB) is used for the seal (14).

3. Process according to either of Claims 1 and 2, **characterized in that** a pressure on the seal (14) equal to or greater than 1kg/cm²; and preferably greater than 2 kg/cm², is applied during the sealing step.

4. Process according to any one of Claims 1 to 3, **characterized in that** the seal (14) forms a thin layer, the thickness of this seal relative to its width, defined as the separation between the internal and external edges (14a, 14b) of the seal, being 1:n, where n is of the order of 20 or more, preferably greater than 30 and more preferably greater than 40.

5. Process according to any one of Claims 1 to 4, **characterized in that** the substrates (2, 3) are made of soda-lime glass.

6. Process according to any one of Claims 1 to 5, which furthermore includes a step of pumping the space contained between the first and second substrates (2, 3) via a means (16) of access to this space, **characterized in that**, after pumping, this means of access is sealed by means of an organic material based on an epoxy or a polyvinyl butyrate.

7. Process according to any one of the preceding Claims, **characterized in that** at least one dielectric layer (5, 6) of organic material is deposited on at least one of the substrates (2, 3).

8. Process according to Claim 7, **characterized in that** a thin layer (51, 61) of dielectric material, for example magnesium oxide (MgO), is deposited on the said dielectric layer (5, 6) using a cold deposition technique.

9. Process according to any one of Claims 1 to 8, **characterized in that** at least one layer of organic material is interposed between the seal (14) and at least one of the substrates (2, 3).

10. Process according to any one of Claims 1 to 9, in which a layer (5, 6) of dielectric is deposited on at least one of the substrates (2, 3), **characterized in that** the said layer (5, 6) is produced by a step of depositing a material, chosen from polyphenylquinoxalines (PPQ) and polyimides (PI), as a thin layer.

11. Process according to Claim 10, **characterized in that** the dielectric layer (5, 6) is stabilized at a temperature of between 300°C and 400°C.

12. Process according to Claim 10 or 11, **characterized in that** the dielectric layer (5, 6) is formed with a thickness ranging from 3 to 20 microns, and preferably from 5 to 15 microns.

13. Process according to any one of Claims 10 to 12, **characterized in that** a colouring agent, for example titanium oxide, is added to the material intended to form the dielectric layer (5, 6).

14. Process according to any one of Claims 10 to 13, **characterized in that** a filler comprising glass microspheres is added to the material intended to form the dielectric layer (5, 6).

15. Process according to any one of Claims 1 to 14, which furthermore includes the production of raised elements carried by at least one of the substrates (3), such as barriers (7) in the case of a plasma panel, **characterized in that** these elements are produced from a material which does not require firing above 400°C.

16. Process according to Claim 15, **characterized in that** the said material used for producing raised elements (7) is a polyimide.

17. Process according to Claim 15 or 16, **characterized in that** at least one mineral additive is added to the said material used for producing raised elements (7) in order to modify the colour and/or the creep strength thereof.

18. Process according to any one of Claims 15 to 17, **characterized in that** a filler comprising glass microspheres is added to the material of which the raised elements (7) are composed.

19. Use of the process according to any one of Claims 1 to 18 for the manufacture of a plasma panel.

20. Plasma panel comprising first and second substrates (2, 3) which are sealed by a seal (14), **characterized in that** the seal (14) is made of a material of the epoxy or polyvinyl butyrate (PVB) type, and **in that** at least one of the substrates (2, 3) bears at least one layer (5, 6, 7) of organic material.

## Patentansprüche

1. Verfahren zur Herstellung von Komponenten des Typs mit einem ersten und einem zweiten Glassubstrat (2,3), die gegenseitig durch eine Dichtung (14) abgedichtet sind,
**dadurch gekennzeichnet, dass**
wenigstens auf einem der Substrate (2,3) wenigstens eine Schicht (5,6,7) aus einem organischen Material gebildet wird, dass für die Dichtung (14) ein Material vom Typ Epoxy oder Polyvinylbutyrat (PVB) benutzt wird und dass die Dichtung (14) nach der Positionierung des ersten und des zweiten Substrats (2,3) einer Behandlungstemperatur zwischen 200°C und 300°C ausgesetzt wird.

2. Verfahren nach Anspruch 1, **dadurch gekennzeichnet, dass** für die Dichtung (14) ein Polyvinylbutyrat (PVB) verwendet wird.

3. Verfahren nach einem der Ansprüche 1 und 2, **dadurch gekennzeichnet, dass** bei dem Schritt der Dichtung auf die Dichtung ein Druck gleich oder größer als 1 kg/cm² und vorzugsweise oberhalb von 2 kg/cm² ausgeübt wird.

4. Verfahren nach einem der Ansprüche 1 bis 3, **dadurch gekennzeichnet, dass** die Dichtung (14) eine dünne Schicht bildet, dass die Dicke der Dichtung relativ zu der Breite, definiert als die Trennung zwischen den inneren Kanten und den äußeren Kanten (14a, 14b) der Dichtung 1:n beträgt, wobei n etwa 20 oder mehr, vorzugsweise oberhalb 30 und vorzugsweise mehr als 40 beträgt.

5. Verfahren nach einem der Ansprüche 1 bis 4, **dadurch gekennzeichnet, dass** die Substrate (2,3) durch ein Natronkalkglas gebildet sind.

6. Verfahren nach einem der Ansprüche 1 bis 5 mit zusätzlich einem Schritt zum Vakuumpumpen des Raums zwischen dem ersten und dem zweiten Substrat (2,3) über ein Mittel (16) für den Zugang zu diesem Raum, **dadurch gekennzeichnet, dass** diese Zugangsmittel nach dem Pumpvorgang durch ein organisches Material auf der Basis von Epoxy oder Polyvinylbutyrat abgedichtet wird.

7. Verfahren nach einem der vorangehenden Ansprüche, **dadurch gekennzeichnet, dass** auf wenigsten eines der Substrate (2,3) wenigstens eine dielektrische Schicht (5,6) aus einem organischen Material aufgebracht wird.

8. Verfahren nach Anspruch 7, **dadurch gekennzeichnet, dass** auf die dielektrische Schicht (5, 6) aus einem organischen Material eine dünne Schicht aus einem dielektrischen Material (51, 61) aufgebracht wird, zum Beispiel Magnesiumoxid (MgO) durch eine Lösung zur Aufbringung bei Kälte.

9. Verfahren nach einem der Ansprüche 1 bis 8, **dadurch gekennzeichnet dass** wenigstens eine Schicht aus einem organischen Material zwischen der Dichtung (14) und wenigstens einem der Substrate (2,3) eingefügt wird.

10. Verfahren nach einem der Ansprüche 1 bis 9, wobei auf wenigstens eines der Substrate (2,3) eine dielektrische Schicht (5,6) aufgebracht wird, **dadurch gekennzeichnet, dass** die Schicht (5,6) durch einen Schritt zur Aufbringung einer dünnen Schicht des Materials gebildet wird, das aus dem Polyphenylquinoxalin (PPQ) und den Polyimiden (PI) ausgewählt ist.

11. Verfahren nach Anspruch 10, **dadurch gekennzeichnet, dass** die dielektrische Schicht (5,6) bei einer Temperatur zwischen 300°C und 400°C stabilisiert wird.

12. Verfahren nach einem der Ansprüche 10 oder 11, **dadurch gekennzeichnet, dass** die dielektrische Schicht (5,6) mit einer Dicke von 3 bis 20 µm und vorzugsweise von 5 bis 15 µm ausgebildet ist.

13. Verfahren nach einem der Ansprüche 10 bis 12, **dadurch gekennzeichnet, dass** einem Material zur Bildung der dielektrischen Schicht (5,6) ein Färbemittel, zum Beispiel das Titanoxid, hinzugefügt wird.

14. Verfahren nach einem der Ansprüche 10 bis 13, **dadurch gekennzeichnet, dass** dem Material zur Bildung der dielektrischen Schicht (5,6) ein Zusatz von Glaskügelchen hinzugefügt wird.

15. Verfahren nach einem der Ansprüche 1 bis 14, enthaltend außerdem die Bildung von Reliefelementen auf einem der Substrate (3), wie Barrieren (7) in dem Fall eines Plasmaschirms, **dadurch gekennzeichnet, dass** diese Elemente aus einem Material gebildet werden, das keine Erwärmung über 400°C benötigt.

16. Verfahren nach Anspruch 15, **dadurch gekennzeichnet, dass** das Material für die Bildung der Reliefelemente (7) ein Polyimid benutzt.

17. Verfahren nach Anspruch 15 oder 16, **dadurch gekennzeichnet, dass** dem für die Bildung der Reliefelemente (7) benutzten Material wenigstens ein Zusatzmineral hinzugefügt wird, um die Farbe und/oder den Flusswiderstand zu ändern.

18. Verfahren nach einem der Ansprüche 15 bis 17, **dadurch gekennzeichnet, dass** einem die Reliefelemente bildenden Material ein Zusatz aus Glaskügelchen hinzugefügt wird.

19. Anwendung eines Verfahrens gemäß einem der Ansprüche 1 bis 18 für die Herstellung eines Plasmaschirms.

20. Plasmaschirm mit einem ersten und einem zweiten Substrat (2,3), die durch eine Dichtung (14) abgedichtet sind, **dadurch gekennzeichnet, dass** die Dichtung (14 ) durch ein Material vom Typ Epoxy oder Polyvinylbutyrat (PVB) gebildet ist und dass wenigstens eines der Substrate (2,3) wenigstens eine Schicht (5,6,7) aus einem organischen Material enthält.
